(19) **Europäisches Patentamt European Patent Office Office européen des brevets**

(11) **EP 3 956 700 B1**

(12) **FASCICULE DE BREVET EUROPEEN**

(45) Date de publication et mention de la délivrance du brevet:
**17.09.2025   Bulletin 2025/38**

(21) Numéro de dépôt: **20720027.0**

(22) Date de dépôt: **17.04.2020**

(51) Classification Internationale des Brevets (IPC):
***G02B 5/18*** *(2006.01)*

(52) Classification Coopérative des Brevets (CPC):
**G02B 5/1861;** Y02E 30/10

(86) Numéro de dépôt international:
**PCT/EP2020/060822**

(87) Numéro de publication internationale:
**WO 2020/212556 (22.10.2020 Gazette 2020/43)**

(54) **RÉSEAU DE DIFFRACTION EN RÉFLEXION RÉSISTANT À UN FLUX LUMINEUX À IMPULSIONS ULTRA-COURTES DE FORTE PUISSANCE CRÊTE ET SON PROCÉDÉ DE FABRICATION**

REFLEKTIERENDES BEUGUNGSGITTER MIT BESTÄNDIGKEIT GEGEN ULTRAKURZIMPULSLICHTSTROM MIT HOHER SPITZENLEISTUNG UND VERFAHREN ZU DESSEN HERSTELLUNG

REFLECTIVE DIFFRACTION GRATING RESISTANT TO AN ULTRA-SHORT-PULSE LIGHT FLUX WITH HIGH PEAK POWER AND METHOD FOR THE PRODUCTION THEREOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:   **19.04.2019   FR 1904240**

(43) Date de publication de la demande:
**23.02.2022   Bulletin 2022/08**

(73) Titulaire: **Horiba France SAS**
**91120 Palaiseau (FR)**

(72) Inventeurs:
  • **FEILLEUX, Romain**
    **91120 Palaiseau (FR)**
  • **BOUSSADI, Amine**
    **91120 Palaiseau (FR)**

(74) Mandataire: **Jacobacci Coralis Harle**
**32, rue de l'Arcade**
**75008 Paris (FR)**

(56) Documents cités:
    **WO-A1-2010/125308      WO-A1-2018/226539**
    **US-A1- 2004 190 141**

    • **JOHN L. HOSTETLER ET AL: "Measurement of the electron-phonon coupling factor dependence on film thickness and grain size in Au, Cr, and Al", APPLIED OPTICS, vol. 38, no. 16, 1 June 1999 (1999-06-01), WASHINGTON, DC; US, pages 3614, XP055664508, ISSN: 0003-6935, DOI: 10.1364/AO.38.003614**

**Description**

**Domaine technique**

La présente invention concerne de manière générale le domaine des réseaux de diffraction utilisés dans des lasers de haute puissance, par exemple pour la compression d'impulsions laser.
Elle concerne plus particulièrement un réseau de diffraction en réflexion résistant à un flux laser à impulsions ultra-courtes de forte puissance crête. Elle concerne aussi le procédé de fabrication d'un tel réseau.

**Technique antérieure**

La recherche, notamment dans le domaine de la fusion nucléaire, de la physique des plasmas et de la physique fondamentale, utilise aujourd'hui des lasers à impulsions ultra-courtes (dont la durée d'impulsion est inférieure à ~500 fs) avec des énergies de plus en plus importantes dans le but d'atteindre des puissances crêtes approchant ou dépassant le pétawatt (PW).
Or, la puissance maximum atteignable est limitée par la tenue au flux des composants optiques de la chaine laser. La tenue au flux laser d'un composant optique dépend notamment de la densité d'énergie par unité de surface et de la durée des impulsions.
Les problèmes de seuil de dommage des composants optiques dans les lasers à impulsions de haute énergie ont été partiellement résolus par la technique d'amplification à dérive de fréquence ou CPA (pour Chirped Pulse Amplification). Le principe de la CPA est d'élargir temporellement une impulsion lumineuse, réduisant ainsi sa puissance crête, d'amplifier l'impulsion élargie temporellement puis, en fin de chaîne laser, de recomprimer temporellement l'impulsion amplifiée pour obtenir une impulsion courte de haute énergie. Ainsi la puissance lumineuse pendant l'amplification peut être réduite de plusieurs ordres de grandeur. Cependant, le risque de détruire un composant optique persiste sur l'étage effectuant la compression de l'impulsion, basé notamment sur l'utilisation de réseaux de diffraction. Certains de ces composants sont en effet exposés à l'impulsion amplifiée en énergie et compressée temporellement qui présente la puissance crête la plus importante. Les réseaux de diffraction des compresseurs sont ainsi les composants limitants en termes de tenue au flux.
Les réseaux de diffraction pour compression d'impulsion sont souvent des réseaux métalliques classiques. Pour la compression d'impulsions dans le domaine infrarouge (à 800 nm, 1053 nm ou 1550 nm), on n'utilise pas de réseau en Aluminium, car leur efficacité de diffraction, généralement inférieure à 90%, est insuffisante. D'autre part, les réseaux de diffraction en argent sont oxydables et donc peu utilisés. On utilise plutôt des réseaux recouverts d'une couche d'or. Les réseaux en or offrent une excellente efficacité de diffraction sur une large bande passante spectrale et ne requièrent pas de couche protectrice puisque l'or est un matériau inoxydable. Cependant, les réseaux en or souffrent d'une tenue au flux laser limitée en régime femtoseconde. De plus, le seuil de dommage d'un réseau de diffraction en or dépend de nombreux paramètres tels que la fluence du laser, la durée et la fréquence de répétition des impulsions.
Une autre solution pour augmenter l'efficacité de diffraction et la tenue au flux a été de fabriquer des réseaux de diffraction sur des miroirs diélectriques (MLD : multi-layer dielectric). Un réseau MLD comprend généralement un empilement alterné d'un nombre important de couches de deux matériaux diélectriques totalement transparents d'indices optiques différents et alternées dans le sens de l'épaisseur et un réseau formé dans la dernière couche mince en surface de l'empilement multicouche. Ces réseaux MLD sont décrits en détail dans de nombreux articles, par exemple : « Design of high-efficiency dielectric reflection grating » by Shore et al., JOSA A, Vol. 14, Issue 5, pp. 1124-1136, « High-Efficiency Dielectric Reflection Gratings: Design, Fabrication, and Analysis » by Hehl et al., Applied Optics, Vol. 38, Issue 30, pp. 6257-6271, « Design of diffraction gratings for multipetawatt laser compressors » by Bonod et al., Proc. SPIE, Vol. 5962, 59622M (2005). Ces publications préconisent de fabriquer des réseaux de diffraction à base de matériaux entièrement diélectriques, transparents et sans absorption, comprenant un nombre élevé de bicouches, pour permettre d'obtenir des réseaux MLD dont la tenue au flux est deux à trois fois meilleure que celle des réseaux comprenant une seule couche d'or. En théorie, les réseaux MLD ont également une efficacité de diffraction supérieure à celle des réseaux en or. Selon les applications, il y a actuellement une compétition entre les réseaux de diffraction en or et les réseaux MLD.
Cependant, les réseaux MLD sont plus compliqués à fabriquer que les réseaux métalliques et donc plus coûteux. De plus, les réseaux MLD ont une bande passante spectrale trop limitée (quelques dizaines de nm) pour être utilisés sur les chaînes lasers à impulsions ultra-brèves (< 50 fs). En effet, la durée du pulse laser est liée par transformée de Fourrier à la largeur de bande spectrale du laser, ce qui signifie que le produit de la durée d'impulsion par la largeur spectrale du rayonnement lumineux est une constante. A titre d'information, à la longueur d'onde centrale de 800 nm, couramment utilisée aujourd'hui, ce produit vaut environ 1000 fs.nm, ce qui signifie que pour obtenir une impulsion de largeur temporelle inférieure à 10 fs, il faut une bande passante supérieure à 100 nm. On parle ici de bande passante à très haute efficacité (>90%) sur un domaine de longueur d'onde entourant la longueur d'onde centrale d'intérêt. Un réseau de diffraction MLD ne peut avoir ce type de performances en bande passante. Les réseaux MLD ont une bande passante typiquement inférieure à 50 nm à la longueur d'onde centrale de 1053 nm.

La tenue au flux des éléments optiques (matériaux, miroirs, réseaux de diffraction) exposés à des impulsions laser est un domaine d'investigation encore vaste où tous les phénomènes ne sont pas encore expliqués. Les dommages induits dans les matériaux par un flux laser en régimes d'impulsion de durée nanoseconde à picoseconde sont assez bien connus maintenant. Dans le domaine femtoseconde, de nouveaux phénomènes se produisent et le mode d'endommagement est différent.

Dans les régimes picoseconde et nanoseconde les principaux phénomènes sont de nature thermique et liés à l'absorption notamment pour les réseaux métalliques. Quel que soit le matériau, le seuil d'endommagement suit une loi en racine carrée de la durée d'impulsion. Les articles suivants décrivent un certains nombre de mesures et de modèles d'endommagement laser sur des miroirs et des réseaux de diffraction : « Optical ablation by high-power short-pulse lasers » by Stuart et al., JOSA B, Vol. 13, Issue 2, pp. 459-468 , « Short-pulse laser damage in transparent materials as a function of pulse duration » by Tien et al, Physical Review Letters, Volume 82, Issue 19, May 10, 1999, pp.3883-3886.

Pour des durées d'impulsions femtoseconde, on s'écarte de cette loi, les phénomènes physiques à l'échelle locale d'un trait du réseau semblent alors liés au carré du champ électrique de l'onde électromagnétique lumineuse dans les matériaux. Il est ainsi montré par les articles suivants : « Multilayer dielectric gratings for petawatt-class laser systems » by Britten et al. Proceedings of the SPIE, Volume 5273, pp. 1-7 (2004), « Effect of electric field on laser induced damage threshold of multilayer dielectric gratings » by Neauport et al, Optics Express, Vol. 15, Issue 19, pp. 12508-12522, que l'endommagement des réseaux de diffraction en régime femtoseconde (durée d'impulsion inférieure à 500fs.) est fortement lié à la valeur du champ électrique au carré dans le matériau constituant le profil des traits du réseau de diffraction.

En effet, pour des réseaux de diffraction très efficaces (c'est-à-dire dont l'énergie diffractée est quasiment totalement concentrée dans l'ordre de diffraction utile (l'ordre -1 pour ce type de réseau)), il y a formation d'ondes stationnaires dues à l'interférence du champ incident avec le champ diffracté et le champ électrique peut avoir une amplitude double de celle du champ incident à proximité ou à l'intérieur du matériau. On parle alors de renforcement du champ électrique.

Il existe des réseaux de diffraction métallique classique fonctionnant en polarisation TE ou TM avec un traitement métallique généralement en or. Le champ électrique au niveau du métal et de l'interface métal-vide connaît des zones de renforcement important du champ électro-magnétique à certains points du profil des traits qui constituent les zones de faiblesse pour la tenue au flux.

La tenue au flux laser dépend bien sûr aussi de la qualité de fabrication du réseau et notamment de la pureté des matériaux utilisés, densité des matériaux, absence d'impureté ou de défauts (craquelure, inclusion, bulles, rugosité).

Le document de brevet WO2010/125308_A1 décrit un réseau de diffraction en réflexion comprenant une surface métallique formant des traits de réseau recouverts d'une couche mince diélectrique. Cette structure de réseau de diffraction vise à repousser les zones d'interférences du champ électrique à l'extérieur du réseau de diffraction. Un tel réseau métal-diélectrique présente une très haute efficacité de diffraction et une meilleure tenue à un flux lumineux en régime femtoseconde. On peut aussi citer WO2018/226539_A1 comme exemple de réseau de diffraction de l'art antérieur.

Toutefois, de manière générale, il est souhaitable de reculer encore le seuil d'endommagement d'un réseau de diffraction destiné à être exposé à un flux lumineux à impulsions ultra-courtes et de très haute énergie.

De plus, il est souhaitable d'améliorer la réponse spectrale, c'est à dire d'augmenter l'efficacité de diffraction et/ou la largeur de bande spectrale, d'un réseau de diffraction ayant une tenue au flux améliorée.

Cependant, la modélisation des phénomènes physiques en régime d'impulsions lumineuses ultracourtes est très difficile et ne permet pas en l'état actuel des connaissances de prévoir la réponse d'un réseau de diffraction quelconque à un flux laser intense et encore moins de proposer une structure de réseau de diffraction ayant en même temps une tenue au flux améliorée et une haute efficacité de diffraction sur une large bande spectrale.

**Exposé de l'invention**

Afin de remédier à l'inconvénient précité de l'état de la technique, la présente invention propose un réseau de diffraction en réflexion résistant à un flux lumineux à impulsions ultra-courtes de forte puissance crête, le réseau de diffraction comprenant des traits de réseau formés sur une surface d'un substrat et une couche externe réfléchissante.

Plus particulièrement, on propose selon l'invention un réseau de diffraction selon la revendication 1 comportant au moins une couche intermédiaire métallique disposée entre la couche externe réfléchissante et la surface du substrat comportant les traits de réseau, la couche intermédiaire métallique est une couche continue à deux dimensions qui recouvre la surface des traits du réseau, la couche externe réfléchissante est une couche continue à deux dimensions qui recouvre la couche intermédiaire métallique et ayant une interface avec la couche intermédiaire métallique, la couche externe réfléchissante étant constituée d'un premier métal et la couche intermédiaire métallique étant constituée d'un autre métal, l'autre métal ayant un coefficient de couplage électron-phonon supérieur au coefficient de couplage électron-phonon du premier métal, la couche externe réfléchissante ayant une épaisseur comprise dans une gamme ayant une limite inférieure déterminée par un coefficient de réflexion du premier métal et une limite supérieure déterminée par une longueur de diffusion thermique du premier métal, et la couche intermédiaire métallique ayant une autre épaisseur supérieure à une valeur minimum de manière à augmenter la résistance du réseau de diffraction en réflexion à un flux lumineux à impulsions ultra-courtes de forte puissance crête, l'épaisseur de la couche intermédiaire métallique étant comprise entre 20 nm et 250 nm, l'autre métal est choisi parmi du nickel, du cuivre, du molybdène, du chrome, de l'argent ou un alliage argent-iridium.

Dans le présent document, on entend par « premier métal » un matériau constitué de métal pur ou d'un alliage métallique.

De manière analogue, on entend par « autre métal » un matériau constitué d'un autre métal pur ou d'un autre alliage métallique.

Le réseau de diffraction ainsi obtenu fonctionne sur une bande spectrale large, adaptée pour la compression d'impulsions avec une efficacité de diffraction conservée par comparaison avec un réseau de diffraction conventionnel ayant des traits en or. Le domaine de fonctionnement du réseau de diffraction ainsi obtenu est étendu à la fois en durée, pour les impulsions ultra-courtes de durée inférieure à 20 fs et en fluence lui permettant par exemple de résister à une fluence supérieure à 100 mJ.cm$^{-2}$ avec une impulsion de 25 fs.

D'autres caractéristiques non limitatives et avantageuses du réseau de diffraction conforme à l'invention, prises individuellement ou selon toutes les combinaisons techniquement possibles, sont les suivantes :

- le premier métal est choisi parmi l'or et l'argent, ou un alliage d'or et/ou d'argent et/ou d'un autre matériau, par exemple un alliage or-nickel, or-cuivre, or-argent, or-argent-iridium ou or-cuivre-argent-iridium,
- de préférence le premier métal est de l'or ou un alliage d'or ;
- l'épaisseur de la couche externe réfléchissante est comprise entre 100 nm et 500 nm, et de préférence entre 100 et 150 nm ;
- l'épaisseur de la couche intermédiaire métallique est comprise par exemple entre 50 nm et 150 nm.

Dans un mode de réalisation particulier et avantageux, le réseau de diffraction comporte en outre une couche d'accroche disposée sur la surface du substrat comprenant les traits de réseau, la couche d'accroche étant disposée entre la surface du substrat et la couche intermédiaire métallique, la couche d'accroche ayant une épaisseur inférieure à 25 nanomètres, et de préférence inférieure à 10 nm.

Avantageusement, la couche d'accroche est en chrome ou titane.

De façon avantageuse, le substrat est en silice, silicium, zerodur, pyrex ou borosilicate (BK7).

De manière préférentielle, les traits du réseau sont formés dans le substrat. Dans une alternative, les traits du réseau sont formés par une résine photosensible déposée sur le substrat.

Avantageusement, le réseau de diffraction comporte en outre un revêtement en couche mince diélectrique formé en surface de la couche externe réfléchissante.

Dans un mode de réalisation particulier et avantageux, le réseau de diffraction comporte en outre au moins une autre couche intermédiaire métallique disposée entre le substrat et la couche intermédiaire métallique, la couche intermédiaire métallique et l'autre couche intermédiaire métallique formant un empilement de plusieurs couches intermédiaires métalliques.

L'invention propose également un procédé de fabrication d'un réseau de diffraction en réflexion comprenant les étapes de la revendication 10.

Selon un mode de réalisation particulier et avantageux, le procédé comporte en outre une étape supplémentaire de dépôt d'une couche d'accroche sur les traits du réseau avant l'étape de dépôt de la couche intermédiaire métallique.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

**Brève description des dessins**

De plus, diverses autres caractéristiques de l'invention ressortent de la description annexée effectuée en référence aux dessins qui illustrent des formes, non limitatives, de réalisation de l'invention et où :

[Fig. 1] représente schématiquement une vue en coupe de quelques traits d'un réseau de diffraction métallique selon l'art antérieur, dans un plan transverse à la direction des traits du réseau ;

[Fig. 2] représente schématiquement une vue en coupe de quelques traits d'un réseau de diffraction multi-métallique selon un mode de réalisation de l'invention,

[Fig. 3] représente schématiquement une vue en coupe de quelques traits d'un réseau de diffraction multi-métallique selon un autre mode de réalisation de l'invention.

Il est à noter que sur ces figures les éléments structurels et/ou fonctionnels communs aux différentes variantes peuvent présenter les mêmes références.

## Description détaillée

La présente divulgation concerne en particulier un procédé d'amélioration de la tenue au flux laser de réseaux de diffraction réflectifs métalliques soumis à des impulsions laser ultra-intense et ultra-courtes (durée d'impulsion <500 fs).

Le domaine spectral actuel de travail dans le domaine des lasers à impulsions courtes est situé dans le proche infrarouge (700 nm-1100 nm). Les impulsions ultra-courtes se font principalement à une longueur d'onde centrale de 800 nm, milieu de la plage de gain du cristal Ti : Saphir utilisé le plus couramment dans les chaînes laser à impulsions ultra-brèves.

On considère ici la fabrication d'un réseau de diffraction.

Le substrat 1 est généralement en silice, silicium ou formé à partir d'une matrice céramique optique (par exemple de type Zerodur, Pyrex ou BK7). Une surface 10 du substrat 1 est préalablement polie de manière à présenter une rugosité de surface résiduelle inférieure à une fraction de la longueur d'onde d'utilisation. La surface 10 peut être plane, concave ou convexe. Par un procédé connu de l'homme du métier, on forme des traits 11 de réseau de diffraction sur la surface 10 du substrat 1. Une méthode connue repose sur la gravure directe de la surface d'un substrat pour former les traits du réseau. Une autre méthode connue repose sur une technique d'holographie à partir d'un réseau maître et de photolithographie appliquée à une couche de résine photosensible déposée sur le substrat. Les traits s'étendent dans une direction généralement parallèle à la surface du substrat. Le profil des traits du réseau dans un plan transverse à la direction des traits peut être de forme carrée, rectangulaire, trapézoïdale ou pseudo-trapézoïdal, triangulaire symétrique ou asymétrique par rapport à un plan transverse à la surface 10 du substrat comprenant la direction des traits du réseau ou encore sinusoïdal ou pseudo-sinusoïdal. Le pas P du réseau de diffraction est généralement compris entre environ 800 et 2400 traits/mm.

De façon avantageuse, il est aussi connu de déposer, par exemple par évaporation, une couche mince d'accroche 2 sur la surface comportant les traits 11 du réseau de diffraction. La couche mince d'accroche 2 est généralement une couche mince de chrome ou de titane ayant une épaisseur de quelques nanomètres (inférieure à environ 25 nm et de préférence inférieure à 10 nm). Une couche réfléchissante 3 métallique est formée, par exemple par évaporation, sur la couche mince d'accroche 2. De façon alternative, en absence de couche d'accroche, la couche réfléchissante 3 métallique peut être formée directement sur la surface des traits 11 du réseau de diffraction. La couche réfléchissante 3 métallique est généralement en or ou en aluminium, parfois en argent. L'épaisseur de la couche réfléchissante 3 est généralement comprise entre 100 nm et 500 nm. Cette épaisseur permet d'obtenir un coefficient de réflexion élevé et donc une efficacité de diffraction élevée tout en limitant la rugosité en surface des traits du réseau.

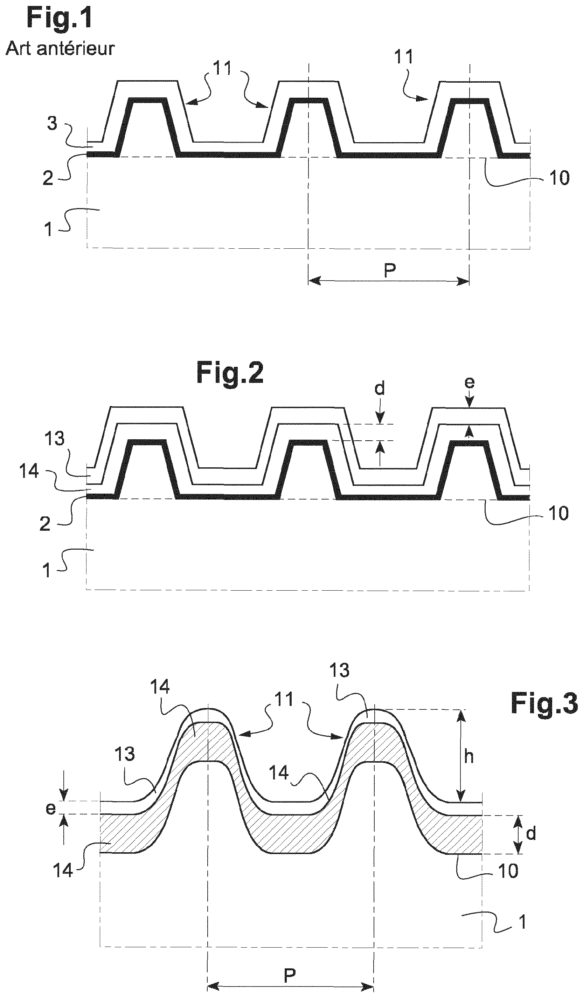

La figure 1 illustre un exemple de réseau de diffraction métallique de l'art antérieur comprenant un substrat 1, des traits 11 de réseau de diffraction formés sur une surface 10 du substrat, par exemple par photolithographie dans une couche de résine photosensible, une couche mince d'accroche 2 déposée sur les traits de réseau 11, une couche réfléchissante métallique 3 déposée sur la couche mince d'accroche 2.

Une constatation faisant partie de la présente divulgation est que l'endommagement d'un réseau de diffraction métallique classique à couche d'or suite à une exposition à un flux lumineux à impulsions ultra-courtes et de très haute énergie conduit à la formation de cratères résultant d'un phénomène de fusion de la couche d'or. Au niveau de la couche d'or et de l'interface or-vide, le flux lumineux correspond à un champ électrique qui présente des zones de renforcement important du champ en certains points du profil du réseau qui constituent les zones de faiblesse pour la tenue au flux d'impulsions ultra-courtes et de très haute énergie.

Contrairement à un réseau métal-diélectrique, qui vise à repousser les maximas du champ électrique à l'extérieur du réseau de diffraction, la présente divulgation propose de remplacer la couche réfléchissante 3 métallique d'un réseau classique par un empilement d'au moins deux couches métalliques comprenant une couche externe réfléchissante 13 destinée à être exposée au flux lumineux incident et au moins une autre couche intermédiaire métallique 14 sous-jacente. La couche externe réfléchissante 13 et la couche intermédiaire métallique 14 sont constituées de métaux différents et ont chacune une épaisseur adaptée pour réduire la température dans la couche externe réfléchissante 13.

Toutefois, il n'existe actuellement pas de modèles de simulation prenant en compte la répartition d'un champ électro-magnétique d'impulsions ultra-courtes couplé à un réseau de diffraction comprenant un empilement de couches minces multi-métalliques. En effet, les réseaux de diffraction présentent une structure à deux dimensions qui modifie la répartition spatiale du champ électro-magnétique. Par conséquent, la modélisation est beaucoup plus complexe pour un réseau de diffraction en réflexion que pour un miroir plan réfléchissant.

D'une part, on choisit pour la couche externe réfléchissante un premier métal ayant un coefficient de réflexion élevé dans la gamme spectrale d'intérêt et une épaisseur relativement faible. D'autre part, on sélectionne pour la ou les couches intermédiaires métalliques un autre métal ayant un coefficient de couplage électron-phonon élevé, une résistance thermique élevée et une épaisseur suffisante.

La constante de couplage électron-phonon est primordiale dans le choix du matériau de la ou les couches intermédiaires métalliques. Les coefficients de couplage électron-phonon sont connus pour la plupart des matériaux métalliques. On trouve dans la littérature scientifique les valeurs suivantes de coefficient de couplage électron-phonon pour différents métaux à température ambiante.

[Tableaux 1] Le Tableau 1 indique les coefficients de couplage électron-phonon de différents métaux.

| Métal | Coefficient de couplage électron - phonon (W.m$^{-3}$.K$^{-1}$) |
|---|---|
| Au | $2,1 \times 10^{16}$ |
| Mo | $13 \times 10^{16}$ |
| Ni | $36 \times 10^{16}$ |
| Ag | $3,1 \times 10^{16}$ |
| Cu | $10 \times 10^{16}$ |
| Cr | $42 \times 10^{16}$ |

Sans être lié par une interprétation des phénomènes physiques mis en œuvre, l'ajout d'une couche intermédiaire d'un métal ayant un couplage électron-phonon élevé en contact avec la couche externe réfléchissante vise à augmenter la dynamique d'échanges thermiques entre les électrons induits par chauffage dans la couche externe réfléchissante et les phonons de la couche intermédiaire métallique. La combinaison de la couche externe réfléchissante 13 et de la couche intermédiaire métallique 14 et leurs épaisseurs respectives sont ainsi choisis de manière permettre de diminuer localement la température dans la couche externe réfléchissante 13. La combinaison de couches minces de différents métaux permet de déplacer le lieu d'équilibre thermique et de concentrer l'énergie thermique induite par l'interaction laser-matière, préférentiellement au niveau de la couche intermédiaire métallique. Cette dernière est choisie pour sa plus grande résistance vis-à-vis de l'énergie thermique par rapport à la couche externe réfléchissante.

On sélectionne une couche intermédiaire métallique 14 en nickel, molybdène, cuivre, chrome, argent ou en alliage argent-iridium. La couche intermédiaire métallique 14 a une épaisseur, notée d, supérieure à une valeur minimum de manière à permettre d'absorber et de diffuser la chaleur provenant de la couche externe métallique. Néanmoins, en pratique, l'épaisseur d de la couche intermédiaire métallique 14 est inférieure à une valeur maximum, d'une part, pour éviter d'augmenter la rugosité de surface et, d'autre part, pour conserver la forme du profil des traits du réseau. La couche intermédiaire métallique 14 a une épaisseur d comprise entre 20 nm et 250 nm, par exemple entre 50 nm et 150 nm.

L'épaisseur d de la couche intermédiaire métallique 14 est ici mesurée suivant une direction transversale à la surface 10 supportant les traits du réseau. Toutefois, comptetenu du profil des traits du réseau, la couche intermédiaire métallique 14 n'a pas nécessairement une épaisseur uniforme sur toute sa surface.

La couche intermédiaire métallique 14 est une couche continue à deux dimensions qui recouvre la surface des traits du réseau. De même, la couche externe réfléchissante 13 est une couche continue à deux dimensions qui recouvre la couche intermédiaire métallique 14 sous-jacente.

La figure 3 illustre un exemple de réseau de diffraction multi-métallique à profil de traits pseudo-sinusoïdal, vu en coupe, selon un mode de réalisation de l'invention. Les traits 11 du réseau sont formés directement dans le substrat 1. Une couche intermédiaire métallique 14 d'épaisseur d est déposée sur ces traits, et une couche externe réfléchissante 13 est déposée sur la couche intermédiaire métallique 14. L'épaisseur e de la couche externe réfléchissante 13 et l'épaisseur d de la couche intermédiaire métallique 14 sont suffisamment faibles pour conserver la profondeur h des traits du réseau.

Dans une variante, on utilise un empilement de plusieurs couches intermédiaires métalliques disposées entre le substrat et la couche externe réfléchissante. Par exemple, on utilise un empilement périodique constitué d'une couche de chrome et d'une couche d'or, ce motif bicouche étant répété deux fois pour former un empilement total de quatre couches intermédiaires métalliques. Un tel empilement permet à la fois un meilleur amortissement mécanique et un renforcement métallique.

La couche externe réfléchissante 13 a une épaisseur, notée e, supérieure à une limite inférieure déterminée par un coefficient de réflexion, de manière à ce que le réseau de diffraction présente un taux de réflexion élevé sur une gamme spectrale étendue sur plus de 100 nm autour d'une longueur d'onde centrale. D'autre part, la couche externe réfléchissante 13 a une épaisseur e inférieure à une autre limite supérieure déterminée par une longueur de diffusion thermique du premier métal. De plus, l'épaisseur e de la couche externe métallique 13 peut être limitée pour des raisons économiques compte tenu du coût du premier métal, notamment lorsque le premier métal est de l'or.

La longueur de diffusion thermique, notée $L_{th}$, est définie par l'équation suivante où D représente la diffusivité du matériau : $L_{th} = \sqrt{\pi . D . t}$ et s'applique notamment à un faisceau Gaussien où t représente la largeur à mi-hauteur de l'impulsion laser.

[Tableaux 2] Le Tableau 2 indique la longueur de diffusion thermique de différents métaux.

| Métal | Longueur de diffusion thermique ($\times 10^{-6}$ .m$^2$.s.$^{-1}$) |
|---|---|
| Au | 127,2 |
| Mo | 53,9 |
| Ni | 23 |
| Ir | 50,2 |
| Ag | 173 |
| Cu | 117 |
| Cr | 29,9 |

L'épaisseur de la couche externe réfléchissante 13 est ici mesurée suivant une direction transversale à la surface 10 supportant les traits du réseau. Toutefois, compte-tenu du profil des traits du réseau, la couche externe réfléchissante 13 n'a pas nécessairement une épaisseur uniforme sur toute sa surface.

La couche externe réfléchissante 13 a généralement une épaisseur e comprise entre environ 100 nm et 500 nm, et de préférence entre 100 et 150 nm.

On optimise par une méthode d'essais les épaisseurs de la couche intermédiaire métallique 14 et de la couche externe réfléchissante 13. De plus, on optimise aussi le ratio entre l'épaisseur (i) de la couche intermédiaire métallique 14 et l'épaisseur (r) de la couche externe réfléchissante 13. De préférence, ce ratio i/r est compris entre 0 et 1.

De manière générale, l'augmentation de l'épaisseur totale de l'empilement de couches multi-métallique 13, 14 permet d'améliorer la capacité volumique de dissipation thermique de cet empilement par comparaison avec une seule couche métallique d'or.

On détermine un compromis entre une épaisseur e minimum de la couche externe réfléchissante 13 pour obtenir un coefficient de réflexion élevé et une épaisseur e maximum pour assurer une bonne tenue au flux.

A titre d'exemple, on choisit une couche externe réfléchissante 13 en or et une couche intermédiaire métallique 14 en nickel. Pour obtenir un coefficient de réflexion élevé sur une bande spectrale de plus de 100 nm autour de la longueur d'onde de 800 nm, on choisit une épaisseur e minimum de 100 nm pour la couche externe en or. Dans un exemple de réalisation, pour augmenter la résistance d'un réseau de diffraction, il apparait intéressant d'utiliser une couche d'or ayant une épaisseur de 100 nm et une couche de nickel ayant une épaisseur de 50 nm.

La couche intermédiaire métallique 14 et la couche externe réfléchissante 13 sont déposées par toute technique de dépôt connue de l'homme du métier. A titre d'exemple non limitatif, on utilise une technique d'évaporation éventuellement assistée par faisceau d'électron (e-beam), par faisceau d'ion (Ion Beam Sputtering), pulvérisation cathodique et/ou par magnétron ou par dépôt de couches atomiques (Atomic Layer Deposition).

Cette structure de réseau de diffraction multi-métallique permet à la couche intermédiaire métallique 14, par exemple en nickel, de pomper une partie de l'énergie thermique de la couche d'or et de diffuser cette énergie thermique dans le volume de la couche intermédiaire métallique 14. Ce transfert d'énergie peut s'expliquer par un mécanisme de thermalisation des électrons du métal de la couche externe réfléchissante et une transmission d'une partie de l'énergie thermique qui diffuse dans la couche intermédiaire métallique sous-jacente. Cette structure multi-métal permet de reculer le seuil de fusion de la couche externe métallique (par exemple en or) et de répartir une partie de cette énergie thermique dans la couche intermédiaire métallique 14 par exemple en nickel. Or le point de fusion du nickel est supérieur à celui de l'or. Ainsi, le réseau de diffraction à empilement multi-métallique est plus résistant qu'un réseau de diffraction à une seule couche métallique et plus résistant qu'un réseau de diffraction métal-diélectrique constitué d'une seule couche métallique recouverte d'un empilement de couche diélectrique.

Le réseau de diffraction en réflexion multi-métallique ainsi obtenu fonctionne en polarisation TM ou TE de manière analogue à un réseau de diffraction en réflexion comprenant une seule couche métallique réfléchissante.

Dans une variante, le réseau de diffraction comporte un empilement constitué d'une couche externe réfléchissante 14 et d'au moins deux couches métalliques intermédiaires.

Dans une autre variante, illustrée sur la figure 2, le réseau de diffraction multi-métallique comporte en outre une couche d'accroche 2 disposée sur la surface du substrat 10 comprenant les traits 11 de réseau, la couche d'accroche 2 étant disposée entre la surface du substrat et la couche intermédiaire métallique, la couche d'accroche ayant une épaisseur inférieure à 25 nanomètres, et de préférence inférieure à 10 nm. La couche d'accroche 2 est de préférence en chrome ou en titane.

Dans une autre variante, éventuellement combinée à l'une et/ou l'autre des variantes précédentes, le réseau de diffraction multi-métallique comporte en outre une couche mince diélectrique déposée sur la couche externe réfléchissante 13. A titre d'exemple, la couche mince diélectrique est en silice ($SiO_2$). De préférence, l'épaisseur de la couche mince diélectrique est inférieure à 50 nm. Cette couche mince diélectrique a un effet sur la répartition spatiale du champ électro-magnétique. La combinaison d'un réseau multi-métallique et d'une couche mince diélectrique permet de repousser encore plus la résistance du réseau de diffraction en réflexion à un flux lumineux d'impulsions ultra-brèves et de haute énergie.

De façon avantageuse, le réseau de diffraction multi-métallique fonctionne en polarisation TM ou TE.

Bien entendu, diverses autres modifications peuvent être apportées à l'invention dans le cadre des revendications annexées.

## Revendications

1. Réseau de diffraction en réflexion résistant à un flux lumineux à impulsions ultra-courtes de forte puissance crête, le réseau de diffraction comprenant des traits de réseau (11) formés sur une surface (10) d'un substrat (1) et une couche externe réfléchissante (13), **caractérisé en ce que** le réseau de diffraction comporte au moins une couche intermédiaire métallique (14) disposée entre la couche externe réfléchissante (13) et la surface (10) du substrat comportant les traits de réseau (11), la couche intermédiaire métallique (14) est une couche continue à deux dimensions qui recouvre la surface des traits du réseau, la couche externe réfléchissante (13) est une couche continue à deux dimensions qui recouvre la couche intermédiaire métallique (14) et ayant une interface avec la couche intermédiaire métallique (14), la couche externe réfléchissante (13) étant constituée d'un premier métal et la couche intermédiaire métallique (14) étant constituée d'un autre métal, l'autre métal ayant un coefficient de couplage électron-phonon supérieur au coefficient de couplage électron-phonon du premier métal, la couche externe réfléchissante (13) ayant une épaisseur comprise dans une gamme ayant une limite inférieure déterminée par un coefficient de réflexion du premier métal et une limite supérieure déterminée par une longueur de diffusion thermique du premier métal, et la couche intermédiaire métallique (14) ayant une autre épaisseur supérieure à une valeur minimum de manière à augmenter la résistance du réseau de diffraction en réflexion à un flux lumineux à impulsions ultra-courtes de forte puissance crête, l'épaisseur de la couche intermédiaire métallique (14) étant comprise entre 20 nm et 250 nm, l'autre métal est choisi parmi du nickel, du cuivre, du molybdène, du chrome, de l'argent ou un alliage argent-iridium.

2. Réseau de diffraction selon la revendication 1 dans lequel le premier métal est choisi parmi l'or et l'argent ou un alliage d'or et/ou d'argent ou un alliage or-nickel, or-cuivre, or-argent, or-argent-iridium ou or-cuivre-argent-iridium.

3. Réseau de diffraction selon la revendication 2 dans lequel l'épaisseur de la couche externe réfléchissante (13) est comprise entre 100 nm et 500 nm.

4. Réseau de diffraction selon l'une des revendications 1 à 3 comprenant en outre une couche d'accroche (2) disposée sur la surface du substrat comprenant les traits de réseau (11), la couche d'accroche (2) étant disposée entre la surface du substrat et la couche intermédiaire métallique (14), la couche d'accroche (2) ayant une épaisseur inférieure à 25 nanomètres.

5. Réseau de diffraction selon la revendication 4 dans lequel la couche d'accroche (2) est en chrome ou titane.

6. Réseau de diffraction selon l'une des revendications 1 à 5 dans lequel le substrat est en silice, silicium, zerodur, pyrex ou borosilicate.

7. Réseau de diffraction selon l'une des revendications 1 à 6 dans lequel les traits du réseau (11) sont formés dans le substrat ou dans lequel les traits du réseau (11) sont formés par une résine photosensible déposée sur le substrat.

8. Réseau de diffraction selon l'une des revendications 1 à 7 comportant en outre un revêtement en couche mince diélectrique formé en surface de la couche externe réfléchissante (13).

9. Réseau de diffraction selon l'une des revendications 1 à 8 comportant en outre au moins une autre couche intermédiaire métallique disposée entre le substrat et la couche intermédiaire métallique (14), la couche intermédiaire métallique (14) et l'autre couche intermédiaire métallique formant un empilement de plusieurs couches intermédiaires métalliques.

**10.** Procédé de fabrication d'un réseau de diffraction en réflexion comprenant les étapes suivantes : formation de traits de réseau (11) de diffraction sur une surface (10) d'un substrat (1) ; dépôt d'une couche intermédiaire métallique (14), la couche intermédiaire métallique (14) étant une couche continue à deux dimensions qui recouvre la surface des traits du réseau, et dépôt d'une couche externe réfléchissante (13), la couche externe réfléchissante (13) étant une couche continue à deux dimensions qui recouvre la couche intermédiaire métallique (14), la couche externe réfléchissante (13) ayant une interface avec la couche intermédiaire métallique (14), la couche externe réfléchissante étant constituée d'un premier métal et la couche intermédiaire métallique (14) étant constituée d'un autre métal, l'autre métal étant choisi parmi du nickel, du cuivre, du molybdène, du chrome, de l'argent ou un alliage argent-iridium, l'autre métal présentant un coefficient de couplage électron-phonon supérieur au coefficient de couplage électron-phonon du premier métal, la couche externe réfléchissante ayant une épaisseur comprise dans une gamme ayant une limite inférieure déterminée par le coefficient de réflexion du premier métal et une limite supérieure déterminée par une longueur de diffusion thermique du premier métal, la couche intermédiaire métallique (14) ayant une autre épaisseur supérieure à une valeur minimum de manière à augmenter la résistance du réseau de diffraction à un flux lumineux à impulsions ultra-courtes de forte puissance crête, l'épaisseur de la couche intermédiaire métallique (14) étant comprise entre 20 nm et 250 nm.

**11.** Procédé de fabrication selon la revendication 10 comprenant en outre une étape supplémentaire de dépôt d'une couche d'accroche (2) sur les traits du réseau avant l'étape de dépôt de la couche intermédiaire métallique (14).

## Patentansprüche

**1.** Reflektierendes Beugungsgitter mit Beständigkeit gegen Ultrakurzimpulslichtstrom mit hoher Spitzenleistung, wobei das Beugungsgitter auf einer Oberfläche (10) eines Substrats (1) gebildete Gitterlinien (11) und eine äußere reflektierende Schicht (13) aufweist, **dadurch gekennzeichnet, daß** das Beugungsgitter mindestens eine zwischen der äußeren reflektierenden Schicht (13) und der die Gitterlinien (11) aufweisenden Oberfläche (10) des Substrats angeordnete metallene Zwischenschicht (14) aufweist, die metallene Zwischenschicht (14) eine durchgehende zweidimensionale Schicht ist, die die Oberfläche der Gitterlinien bedeckt, die äußere reflektierende Schicht (13) eine durchgehende zweidimensionale Schicht ist, die die metallene Zwischenschicht (14) bedeckt und eine Grenzfläche mit der metallenen Zwischenschicht (14) hat, wobei die äußere reflektierende Schicht (13) aus einem ersten Metall besteht und die metallene Zwischenschicht (14) aus einem anderen Metall besteht, wobei das andere Metall einen Elektron-Phonon-Kopplungskoeffizienten hat, der größer als der Elektron-Phonon-Kopplungskoeffizient des ersten Metalls ist, wobei die äußere reflektierende Schicht (13) eine Dicke aufweist, die in einem Bereich mit einer durch einen Reflexionskoeffizienten des ersten Metalls bestimmten unteren Grenze und einer durch eine thermische Diffusionslänge des ersten Metalls bestimmten oberen Grenze liegt, und die metallene Zwischenschicht (14) eine andere Dicke aufweist, die größer als ein Minimalwert ist, um die Beständigkeit des reflektierenden Beugungsgitters gegen einen Ultrakurzimpulslichtstrom mit hoher Spitzenleistung zu erhöhen, wobei die Dicke der metallenen Zwischenschicht (14) zwischen 20 nm und 250 nm beträgt, wobei das andere Metall aus Nickel, Kupfer, Molybdän, Chrom, Silber und einer Silber-Iridium-Legierung ausgewählt ist.

**2.** Beugungsgitter gemäß Anspruch 1, bei dem das erste Metall aus Gold und Silber oder einer Goldlegierung und/oder einer Silberlegierung oder einer Gold-Nickel-Legierung, einer Gold-Kupfer-Legierung, einer Gold-Silber-Legierung, einer Gold-Silber-Iridium-Legierung oder einer Gold-Kupfer-Silber-Iridium-Legierung ausgewählt ist.

**3.** Beugungsgitter gemäß Anspruch 2, bei dem die Dicke der äußeren reflektierenden Schicht (13) zwischen 100 nm und 500 nm beträgt.

**4.** Beugungsgitter gemäß einem der Ansprüche 1 bis 3, das außerdem eine auf der Oberfläche des die Gitterlinien (11) aufweisenden Substrats angeordnete Haftschicht (2) aufweist, wobei die Haftschicht (2) zwischen der Oberfläche des Substrats und der metallenen Zwischenschicht (14) angeordnet ist, wobei die Haftschicht (2) eine Dicke von weniger als 25 Nanometer aufweist.

**5.** Beugungsgitter gemäß Anspruch 4, bei dem die Haftschicht (2) aus Chrom oder Titan ist.

**6.** Beugungsgitter gemäß einem der Ansprüche 1 bis 5, bei dem das Substrat aus Kieselerde, Silizium, Zerodur, Pyrex oder Borosilikat ist.

7. Beugungsgitter gemäß einem der Ansprüche 1 bis 6, bei dem die Gitterlinien (11) im Substrat gebildet sind oder bei dem die Gitterlinien (11) durch ein auf das Substrat aufgetragenes lichtempfindliches Harz gebildet sind.

8. Beugungsgitter gemäß einem der Ansprüche 1 bis 7, das außerdem eine Beschichtung aus einer auf der Oberfläche der äußeren reflektierenden Schicht (13) gebildeten dünnen dielektrischen Schicht aufweist.

9. Beugungsgitter gemäß einem der Ansprüche 1 bis 8, das außerdem mindestens eine zwischen dem Substrat und der metallenen Zwischenschicht (14) angeordnete weitere metallene Zwischenschicht aufweist, wobei die metallene Zwischenschicht (14) und die weitere metallene Zwischenschicht einen Stapel aus mehreren metallenen Zwischenschichten bilden.

10. Verfahren zur Herstellung eines reflektierenden Beugungsgitters mit den folgenden Schritten: Bilden von Beugungsgitterlinien (11) auf einer Oberfläche (10) eines Substrats (1); Auftragen einer metallenen Zwischenschicht (14), wobei die metallene Zwischenschicht (14) eine durchgehende zweidimensionale Schicht ist, die die Oberfläche der Gitterlinien bedeckt, und Auftragen einer äußeren reflektierenden Schicht (13), wobei die äußere reflektierende Schicht (13) eine durchgehende zweidimensionale Schicht ist, die die metallene Zwischenschicht (14) bedeckt, wobei die äußere reflektierende Schicht (13) eine Grenzfläche mit der metallenen Zwischenschicht (14) hat, wobei die äußere reflektierende Schicht (13) aus einem ersten Metall besteht und die metallene Zwischenschicht (14) aus einem anderen Metall besteht, wobei das andere Metall aus Nickel, Kupfer, Molybdän, Chrom, Silber oder einer Silber-Iridium-Legierung ausgewählt ist, wobei das andere Metall einen Elektron-Phonon-Kopplungskoeffizienten hat, der größer als der Elektron-Phonon-Kopplungskoeffizient des ersten Metalls ist, wobei die äußere reflektierende Schicht (13) eine Dicke aufweist, die in einem Bereich mit einer durch den Reflexionskoeffizienten des ersten Metalls bestimmten unteren Grenze und einer durch eine thermische Diffusionslänge des ersten Metalls bestimmten oberen Grenze liegt, und die metallene Zwischenschicht (14) eine andere Dicke aufweist, die größer als ein Minimalwert ist, um die Beständigkeit des reflektierenden Beugungsgitters gegen einen Ultrakurzimpulslichtstrom mit hoher Spitzenleistung zu erhöhen, wobei die Dicke der metallenen Zwischenschicht (14) zwischen 20 nm und 250 nm beträgt.

11. Herstellungsverfahren gemäß Anspruch 10 mit einem zusätzlichen Schritt des Auftragens einer Haftschicht (2) auf den Gitterlinien vor dem Auftragen der metallenen Zwischenschicht (14).

## Claims

1. A high peak power ultrashort pulse light flux-resistant reflective diffraction grating, the diffraction grating comprising grating lines (11) formed on a surface (10) of a substrate (1) and an external reflective layer (13), **characterized in that** the diffraction grating includes at least one intermediate metal layer (14) arranged between the external reflective layer (13) and the substrate surface (10) including the grating lines (11), the intermediate metal layer (14) being a continuous two-dimensional layer that covers the surface of the grating lines, the external reflective layer (13) being a continuous two-dimensional layer that covers the intermediate metal layer (14) and has an interface with the intermediate metal layer (14), the external reflective layer (13) being consisted of a first metal and the intermediate metal layer (14) being consisted of another metal, the other metal having a higher electron-phonon coupling coefficient than the electron-phonon coupling coefficient of the first metal, the external reflective layer (13) having a thickness in a range having a lower limit determined by a reflection coefficient of the first metal and an upper limit determined by a thermal diffusion length of the first metal, and the intermediate metal layer (14) having another thickness greater than a minimum value in such a way as to increase the high peak power ultrashort pulse light flux resistance of the reflective diffraction grating, the thickness of the intermediate metal layer (14) being between 20 nm and 250 nm, the other metal being chosen among nickel, copper, molybdenum, chromium, silver or a silver-iridium alloy.

2. The diffraction grating according to claim 1, wherein the first metal is chosen among gold and silver or an alloy of gold and/or silver or a gold-nickel, gold-copper, gold-silver, gold-silver-iridium or gold-copper-silver-iridium alloy.

3. The diffraction grating according to claim 2, wherein the thickness of the external reflective layer (13) is between 100 nm and 500 nm.

4. The diffraction grating according to any one of claims 1 to 3, further comprising an adhesion layer (2) arranged on the surface of the substrate comprising the grating lines (11), the adhesion layer (2) being arranged between the substrate surface and the intermediate metal layer (14), the adhesion layer (2) having a thickness less than 25 nanometers.

5. The diffraction grating according to claim 4, wherein the adhesion layer (2) is made of chromium or titanium.

6. The diffraction grating according to any one of claims 1 to 5, wherein the substrate is made of silica, silicon, zerodur, pyrex or borosilicate.

7. The diffraction grating according to any one of claims 1 to 6, wherein the grating lines (11) are formed in the substrate or wherein the grating lines (11) are formed by a photosensitive resin deposited on the substrate.

8. The diffraction grating according to any one of claims 1 to 7, further including a dielectric thin-film coating formed at the surface of the external reflective layer (13).

9. The diffraction grating according to any one of claims 1 to 8, further including at least another intermediate metal layer arranged between the substrate and the intermediate metal layer (14), the intermediate metal layer (14) and the other intermediate metal layer forming a stack of several intermediate metal layers.

10. A method for fabricating a reflective diffraction grating comprising the following steps: forming diffraction grating lines (11) on a surface (10) of a substrate (1); depositing an intermediate metal layer (14), the intermediate metal layer (14) being a continuous two-dimensional layer that covers the surface of the grating lines, and depositing an external reflective layer (13), the external reflective layer (13) being a continuous two-dimensional layer that covers the intermediate metal layer (14), the external reflective layer (13) having an interface with the intermediate metal layer (14), the external reflective layer being consisted of a first metal and the intermediate metal layer (14) being consisted of another metal, the other metal being chosen among nickel, copper, molybdenum, chromium, silver or a silver-iridium alloy, the other metal having a higher electron-phonon coupling coefficient than the electron-phonon coupling coefficient of the first metal, the external reflective layer having a thickness in a range having a lower limit determined by the reflection coefficient of the first metal and an upper limit determined by a thermal diffusion length of the first metal, the intermediate metal layer (14) having another thickness greater than a minimum value in such a way as to increase the high peak power ultrashort pulse light flux resistance of the reflective diffraction grating, the thickness of the intermediate metal layer (14) being between 20 nm and 250 nm.

11. The method of fabrication according to claim 12, further comprising an additional step of depositing an adhesion layer (2) on the grating lines before the step of depositing the intermediate metal layer (14).

## Fig.1
Art antérieur

## Fig.2

## Fig.3

## RÉFÉRENCES CITÉES DANS LA DESCRIPTION

**Documents brevets cités dans la description**

- WO 2010125308 A1

- WO 2018226539 A1

**Littérature non-brevet citée dans la description**

- **SHORE et al.** Design of high-efficiency dielectric reflection grating. *JOSA A*, vol. 14 (5), 1124-1136
- **HEHL et al.** High-Efficiency Dielectric Reflection Gratings: Design, Fabrication, and Analysis. *Applied Optics*, vol. 38 (30), 6257-6271
- **BONOD et al.** Design of diffraction gratings for multipetawatt laser compressors. *Proc. SPIE*, 2005, vol. 5962, 59622M
- **STUART et al.** Optical ablation by high-power short-pulse lasers. *JOSA B*, vol. 13 (2), 459-468

- **TIEN et al.** Short-pulse laser damage in transparent materials as a function of pulse duration. *Physical Review Letters*, 10 May 1999, vol. 82 (19), 3883-3886
- **BRITTEN et al.** Multilayer dielectric gratings for petawatt-class laser systems. *Proceedings of the SPIE*, 2004, vol. 5273, 1-7
- **NEAUPORT et al.** Effect of electric field on laser induced damage threshold of multilayer dielectric gratings. *Optics Express*, vol. 15 (19), 12508-12522